(19) Europäisches Patentamt
European Patent Office
Office européen des brevets

(11) **EP 2 944 009 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(21) Anmeldenummer: **14706595.7**

(22) Anmeldetag: **25.02.2014**

(51) Int Cl.:
***H02J 7/00*** *(2006.01)*

(86) Internationale Anmeldenummer:
**PCT/EP2014/053645**

(87) Internationale Veröffentlichungsnummer:
**WO 2014/131765 (04.09.2014 Gazette 2014/36)**

(54) **VERFAHREN UND VORRICHTUNG ZUM ERHÖHEN DER VERFÜGBAREN KAPAZITÄT IN EINEM BATTERIESTRANG DURCH ANGLEICHEN DER ZELL-LADUNGSMENGEN, BATTERIEMANAGEMENTSYSTEM, BATTERIE UND BATTERIELADEGERÄT**

METHOD AND APPARATUS FOR INCREASING THE AVAILABLE CAPACITY IN A LINE OF BATTERIES BY MATCHING THE CELL CHARGE QUANTITIES, BATTERY MANAGEMENT SYSTEM, BATTERY AND BATTERY CHARGER

PROCÉDÉ ET DISPOSITIF DESTINÉS À AUGMENTER LA CAPACITÉ DISPONIBLE D'UN GROUPE ACCUMULATEUR PAR ÉQUILIBRAGE DES NIVEAUX DE CHARGE DES ÉLÉMENTS, SYSTÈME DE GESTION D'ACCUMULATEUR, ACCUMULATEUR ET APPAREIL DE CHARGE D'ACCUMULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2013 DE 102013203174**

(43) Veröffentlichungstag der Anmeldung:
**18.11.2015 Patentblatt 2015/47**

(73) Patentinhaber: **Fraunhofer-Gesellschaft zur Förderung der angewandten Forschung e.V.
80686 München (DE)**

(72) Erfinder:
• **SCHWUNK, Simon
79106 Freiburg (DE)**

• **HEUER, Adrian
79106 Freiburg (DE)**

(74) Vertreter: **Zimmermann, Tankred Klaus
Schoppe, Zimmermann, Stöckeler
Zinkler, Schenk & Partner mbB
Patentanwälte
Radlkoferstrasse 2
81373 München (DE)**

(56) Entgegenhaltungen:
**WO-A1-2012/157747      WO-A2-2012/152770
WO-A2-2013/064759      US-A1- 2006 097 698
US-A1- 2012 256 599**

**Beschreibung**

Die vorliegende Erfindung bezieht sich allgemein auf das Gebiet von Batterien, insbesondere auf einen Ansatz zum Erhöhen der verfügbaren Kapazität in einem Batteriestrang, der eine Mehrzahl von seriell verschalteten Batteriezellen umfasst, auf ein Batteriemanagementsystem, eine Batterie und ein Batterieladegerät. Ausführungsbeispiele der Erfindung betreffen einen Ansatz zur Erhöhung bzw. Maximierung der verfügbaren Kapazität in einem Batteriestrang durch Angleichen der Ladungen der Batteriezellen (Cell-Balancing).

Bekannte Ansätze lehren ein Angleichen bzw. Ausgleichen von Ladezuständen von seriell verschalteten Batteriezellen, die im Regelfall spannungsgeführt oder SOC-geführt arbeiten, sogenannte "Balancer" sind eine Implementierung. SOC -State of Charge (Ladezustand) - beschreibt den aktuellen Ladezustand einer Batterie bzw. einer Batteriezelle, wobei SOC oft relativ zur aktuellen Kapazität in Prozent angegeben wird. Bekannte Balancer-Schaltungen verwenden entweder die Spannung oder den SOC als Indikator für das durchzuführende Cell-Balancing (Angleichen bzw. Ausgleichen der Ladezustände der Batteriezellen). Zur Erkennung der Betriebsparameter wird beispielsweise die Lastspannung gemessen, um Rückschlüsse auf die Leerlaufspannung zu ermöglichen. Diese Leerlaufspannung lässt dann den Rückschluss auf den Ladezustand zu. Solche spannungsbasierten bzw. spannungsgeführten Batteriemanagementsysteme sind jedoch nachteilig, da die Ergebnisse, insbesondere der oben erwähnte Rückschluss auf den Ladezustand, nicht immer eindeutig sind und mit Ungenauigkeiten behaftet sind. Selbst wenn ein Rückschuss auf den Ladezustand gelingen sollte, ist das Ergebnis nicht optimal, da einige Zellen etwas mehr Kapazität/entladbare Ladungsmenge haben können als Andere, wobei Letztere Erstere aber begrenzen.

Balancer (entweder als Teil eines Batteriemanagementsystems oder als Einzelgerät) nutzen heutzutage zumeist die Zellspannung, meistens unter Last, um Zellen zu symmetrieren. Hierdurch wird bei vor Allem bei unterschiedlich gealterten Zellen in jedem Zyklus stark gebalanct, da die Zellspannungen stark mit den Ladezuständen - SOCs - korrelieren.

Ein alternatives Verfahren ist das direkte Nutzen der SOCs. Dieser kann durch Vollladungserkennung und Amperestundenzählung bestimmt werden oder durch alternative Verfahren, die auf einem Kalmanfilter, einem Partikelfilter, einer Fuzzy-Logik, einem regelbasierten Ansatz oder neuronalen Netzen basieren. Diese Verfahren kombinieren üblicherweise Amperestundenzählung mit einer Spannungsmessung, gegebenenfalls nur eine Ruhespannungsmessung.

Zusätzlich kann der Alterungszustand mit ähnlichen Verfahren oder einem Kapazitätstest bestimmt werden, um die Funktion des SOC-Algorithmus zu verbessern. Diesbezüglich sei auf folgende Veröffentlichungen verwiesen:

- Particle filter for state of charge and state of health estimation for lithium-iron phosphate batteries, Journal of Power Sources, In Press, Corrected Proof, Available online 25 October 2012, Simon Schwunk, Nils Armbruster, Sebastian Straub, Johannes Kehl, Matthias Vetter
- Kaiser, R. (2005). Optimierung eines Batteriemanagementsystems zum Einsatz in photovoltaischen Stromversorgungssystemen. Dissertation, Universität Ulm.
- Lee, S., Kim, J., Lee, J., & Cho, B. (2008). State-of charge and capacity estimation of lithium-ion battery using a new open-circuit voltage versus state-of-charge. Journal of Power Sources, 185 (2), 1367{1373.

Die Summe der geladenen und entladenen Ladungen im Verhältnis zur aktuellen Kapazität ergibt den SOC:

$$SOC_{aktuell} = \frac{aktuell\ entnehmbare\ Ladungsmenge}{aktuelle\ Kapazit\ddot{a}t}$$
$$= \frac{aktuell\ entnehmbare\ Ladungsmenge}{SOH_{aktuell} * C_N}$$

Basierend auf den so erfassten SOC-Werten besteht die Aufgabe des Cell-Balancing, nach dem heutigen Stand der Technik, darin, die verschiedenen Ladezustände der Batterie bzw. der seriell verschalteten Batteriezellen anzugleichen bzw. auszugleichen, sofern möglich.

Weitere, bekannte Ansätze, die sich mit dem Laden von Batterien beschäftigen sind z.B in der US2012/0256599, in der WO2012/157747, in der WO 2012/139604 A1, in der US 2013/0026989 A1 oder in der DE 10 2011 079469 A1 beschrieben. Die WO 2012/139604 A1 und die US 2013/0026989 A1 beschreiben Ansätzen, bei denen beim Angleichen (Balancing) von Batteriezellen lediglich auf die Zellspannungen abgestellt wird. Die DE 10 2011 079469 A1 beschreibt Blei-Säure-Akkumulatoren, bei denen ein Angleichen von Zellen nicht erforderlich ist.

Ausgehend von dem oben erläuterten Stand der Technik liegt der vorliegenden Erfindung die Aufgabe zugrunde, einen verbesserten Ansatz zu schaffen, der die verfügbare Kapazität in einem Batteriestrang umfassend eine Mehrzahl von seriell verschalteten Batteriezellen weiter erhöht bzw. maximiert.

Diese Aufgabe wird durch ein Verfahren gemäß Anspruch 1, eine Vorrichtung gemäß Anspruch 12, ein Batteriemanagementsystem gemäß Anspruch 13, eine Batterie gemäß Anspruch 14 und ein Batterieladegerät gemäß Anspruch 15 gelöst.

Die Erfinder der vorliegenden Anmeldung haben erkannt, dass die oben erwähnten, bekannten Ansätze zum Angleichen von seriell verschalteten Batteriezellen, die nur auf der erfassten Spannung bzw. auf dem Ladezustand der Batteriezelle basieren, ungenau arbeiten und keine optimale Angleichung der Batteriezellen ermöglichen. Erfindungsgemäß wurde erkannt, dass die mit den Stand der Technik einhergehenden Nachteile dadurch vermieden werden können, indem die Alterung der Batteriezellen mit in Betracht gezogen wird, was dadurch erreicht wird, dass nicht länger auf die Spannung über der Batteriezelle bzw. den Ladezustand der Batteriezelle abgestellt wird, sondern die tatsächliche Ladungsmenge in der Batteriezelle berücksichtigt wird, die neben dem Ladezustand der Batteriezelle auch von deren Alter abhängt. Erfindungsgemäß wird daher ein Ansatz geschaffen, bei dem das Cell-Balancing ein Angleichen der Ladungsmenge bewirkt.

Die vorliegende Erfindung schafft ein Verfahren zum Erhöhen der verfügbaren Kapazität in einem Batteriestrang, der eine Mehrzahl von seriell verschalteten Batteriezellen umfasst, bei dem die Batteriezellen basierend auf der tatsächlich in den Batteriezellen vorhandenen Ladungsmenge angeglichen werden.

Gemäß Ausführungsbeispielen wird die Ladungsmenge einer Batteriezelle basierend auf einen aktuellen Ladezustand der Batteriezelle und einem Alterungszustand der Batteriezelle bestimmt. Die Ladungsmenge der Batteriezelle kann z.B. durch Gewichten des aktuellen Ladezustands der Batteriezelle mit dem Alterungszustand der Batteriezelle bestimmt werden.

Gemäß Ausführungsbeispielen umfasst jede der Batteriezellen eine Nennkapazität, und die Ladungsmenge einer Batteriezelle umfasst eine aktuell entnehmbare Ladungsmenge der Batteriezelle, die basierend auf einem aktuellen Ladezustand der Batteriezelle, einem Alterungszustand der Batteriezelle und der Nennkapazität der Batteriezelle bestimmt wird, z.B. durch Gewichten des aktuellen Ladezustands der Batteriezelle mit dem Alterungszustand der Batteriezelle und der Nennkapazität der Batteriezelle.

Gemäß Ausführungsbeispielen wird für jede der Batteriezellen die aktuell entnehmbare Ladungsmenge bestimmt.

Gemäß Ausführungsbeispielen umfasst das Angleichen der Batteriezellen ein Sortieren der Batteriezellen nach deren Ladungsmenge bzw. aktuell entnehmbarer Ladungsmenge, und ein Umladen oder Entladen der Batteriezellen basierend auf der Reihenfolge der sortierten Batteriezellen, wobei das Umladen oder Entladen der Batteriezellen eine Änderung eines Batteriezellenstroms umfassen kann. Das Umladen oder Entladen der Batteriezellen kann eine Anpassung der Ladungsmengen der Batteriezellen auf die Ladungsmenge der Batteriezelle mit der niedrigsten Ladungsmenge oder auf die mittlere Ladungsmenge aller Batteriezellen umfassen.

Gemäß Ausführungsbeispielen wird der Alterungszustand einer Batteriezelle aus dem Verhältnis der aktuellen Kapazität zu der Nennkapazität der Batteriezelle bestimmt.

Gemäß Ausführungsbeispielen werden beim Angleichen der Batteriezellen wenig gealterten Batteriezellen stärker belastet als stark gealterte Batteriezellen, wobei an die wenig gealterten Batteriezellen höhere Korrekturströme angelegt werden können als an die stark gealterten Batteriezellen.

Die vorliegende Erfindung schafft ferner eine Vorrichtung zum Erhöhen der verfügbaren Kapazität in einem Batteriestrang, der eine Mehrzahl von seriell verschalteten Batteriezellen umfasst, mit einem Prozessor, der konfiguriert ist, um ein Angleichen der Batteriezellen basierend auf der tatsächlich in den Batteriezellen vorhandenen Ladungsmenge zu bewirken.

Die vorliegende Erfindung schafft ferner ein Batteriemanagementsystem für einen Batteriestrang, der eine Mehrzahl von seriell verschalteten Batteriezellen umfasst, mit einer erfindungsgemäßen Vorrichtung. Gemäß Ausführungsbeispielen umfasst das Batteriemanagementsystem einen oder mehrere Eingänge zum Bereitstellen von Messungen an den Batteriezellen, und einen oder mehrere Ausgänge zum Bereitstellen von Steuersignalen zum Ansteuern der Batteriezellen. Ferner kann eine Batteriezellenangleichschaltung vorgesehen sein, die ansprechend auf Steuersignale von dem Prozessor das Angleichen der Batteriezellen bewirkt.

Die vorliegende Erfindung schafft ferner eine Batterie, mit einer Mehrzahl von seriell verschalteten Batteriezellen und einer erfindungsgemäßen Vorrichtung oder einem erfindungsgemäßen Batteriemanagementsystem.

Die vorliegende Erfindung schafft ferner ein Batterieladegerät, mit einem Anschluss zum Verbinden mit einer Batterie, die eine Mehrzahl von seriell verschalteten Batteriezellen umfasst und einer erfindungsgemäßen Vorrichtung oder einem erfindungsgemäßen Batteriemanagementsystem.

Erfindungsgemäß lässt sich die Lebensdauer von gealterten Batteriepacks erhöhen, indem deren Kapazität erhöht wird. Wenn Stränge eines Batteriepacks altern, so verhalten sich stark gealterte Elemente, also stark gealterte Batteriezellen, eines Stranges als Begrenzer. Sie verhindern die Vollladung einzelner Zellen und begrenzen somit die Entladekapazität des gesamten Strangs. Erfindungsgemäß wird durch Berücksichtigung des Alterungszustands der Batteriezellen gemäß Ausführungsbeispielen, die ein passives Cell-Balancing anwenden, eine Vollladung des Batteriestranges ermöglicht. Bei Ausführungsbeispielen, die ein aktives Cell-Balancing verwenden, wird die Entladekapazität beim Entladen durch eine intelligente Ladungsverschiebung erhöht. Zur Erhöhung der Lebensdauer des Batteriestranges werden ferner Batteriezellen, die stark gealtert sind, von Batteriezellen, die weniger stark gealtert sind, durch das Cell-Balancing gestützt.

Wenn Batteriezellen gealtert sind, laufen die Ladezustände bei Batteriezellen mit unterschiedlichen Alterungszuständen bei Ladung oder Entladung mit gleichem Strom auseinander, ein Vorgang, der erfindungsgemäß durch Berücksichtigung des Alterungszustandes beim Cell-Balancing korrigiert wird. Somit werden gemäß Ausführungsbeispielen der Erfindung Ansätze geschaffen, um beim Cell-Balancing in gealterten Batteriesträngen die alterungsbedingten Ladungsunterschiede zu nivellieren.

Gemäß Ausführungsbeispielen wird ferner ein Batteriemanagementsystem geschaffen, welches beispielsweise den erfindungsgemäßen Ansatz in Form eines Hardwareimplementierten Algorithmus umfasst, und welches die Einschätzung ermöglicht, ob ein Cell-Balancing an bestimmten Batteriezellen eines Batteriepacks überhaupt sinnvoll ist. Ferner kann vorgesehen sein, bei aktiven Balancing-Algorithmen die Richtung der Energieübertragung zu bestimmen, so dass nicht nur das "ob", sondern auch das "wie" des Cell-Balancing festgelegt wird, so dass sich durch eine entsprechende Implementierung in dem Batteriemanagementsystem die Kapazität in dem Batteriestrang erhöhen bzw. maximieren lässt.

Gemäß Ausführungsbeispielen der vorliegenden Erfindung ist somit vorgesehen, Batteriezellen anhand der tatsächlich vorhandenen Ladungsmenge zu bewerten und anzugleichen. Die Batteriezellen werden nicht anhand von Spannungen bewertet, denn die Spannung einer Batteriezelle ist eine Funktion des SOC (Ladezustand). Dies führt zu Falschbewertungen, wenn Batteriezellen in einem Strang über unterschiedliche Kapazitäten verfügen. Gegenüber den Eingangs genannten, bekannten Ansätzen ist der erfindungsgemäße Ansatz, Batteriezellen anhand der tatsächlich vorhandenen Ladungsmenge zu bewerten und anzugleichen, vorteilhaft.

Die WO 2012/139604 A1 beschreibt einen Ansatz, der einen Initialisierungsprozess und einen Betriebsprozess umfasst. Im Initialisierungsprozess wird beim Aufladen ein Lastwiderstand bei Erreichen einer vorgegebenen Ladeschlussspannung eingeschaltet, bis alle Zellen die vorgegebene Ladeschlussspannung erreicht haben. Dabei werden je Zelle die Ladungsmengen gemessen und der Wert der verfügbaren Energiemenge ermittelt. Damit ist der Initialisierungsprozess abgeschlossen. Im Betriebsprozess, erfolgt das Entladen und Wiederaufladen der einzelnen Zellen auf Basis der nunmehr individuell vorgegebenen Ladeschlussspannung. Die diesem bekannten Ansatz wird somit ausschließlich die Ladeschlussspannung bzw. die Zellenspannungen als Richtwert zum Balancieren genutzt. Es wird an einem Punkt die individuell vorhandene Ladungsmenge ermittelt, mit dem Ziel bei gealterten Zellen die Ladeschlussspannung herabzusetzen. Dies führt nicht zu einem Angleichen der tatsächlichen Ladungsmengen, sondern zum Gegenteil: Die Kapazität des Batteriestrangs wird sogar noch weiter gesenkt. Es findet somit zwar eine Lebensdauererhöhung statt, aber das Angleichen von Batteriezellen wird nicht erreicht.

Die US 2013/0026989 A1 beschreibt einen Ansatz zum Angleichen von Zellspannungen während des Ladens einer Batterie. Auch hier wird nur die Zellspannung als Indikator für das Angleichen von Zellen genutzt. Die Verwendung der Ladungsmenge oder ein Algorithmus zur Bestimmung dieser wird nicht erwähnt. Zusätzlich ist es auch nicht vorgesehen, dass das Batteriesteuermodul diesen Wert speichert. Ferner wird erwähnt, dass SOH und SOC bekannt sind, allerdings werden diese Werte nicht weiter berücksichtigt, insbesondere wird nicht beschrieben, dass diese zur Ladungsmengenbestimmung genutzt werden. Grundsätzlich werden Ansätze zum Angleichen der Zellspannungen beschrieben, die Energie vernichten, ein Ansatz, der erfindungsgemäß vermieden wird.

Die DE 10 2011 079469 A1 beschreibt Blei-Säure-Akkumulatoren. Bei dieser Technologie ist das Angleichen von Zellen überflüssig. Es wird ausgeführt, dass der SOH und der SOC einer Batterie wichtige Parameter hinsichtlich des Ladevorgangs darstellen, die mittels eines Batteriemanagementsystems (BMS) bestimmt werden können. Allerdings ermittelt ein BMS im Regelfall den Ladezustand SOC, nicht aber den Alterungszustand SOH. Die tatsächlich nutzbare Ladekapazität wird nicht ermittelt, da diese als Parameter bei der genannten Technologie gar nicht eingesetzt wird. Eine Kombination der Parameter SOH und SOC, um die aktuelle Ladungsmenge je Batteriezelle zu ermitteln und diese dann durch Cell-Balancing anzugleichen, ist nicht vorgesehen.

Ausführungsbeispiele der vorliegenden Erfindung werden nachfolgend unter Bezugnahme auf die beiliegenden Zeichnungen näher erläutert. Es zeigen:

Fig. 1 eine schematische Darstellung einer Batterie mit einem Batteriestrang, der eine Mehrzahl von seriell verschalteten Batteriezellen, und mit einem Batteriemanagementsystem;

Fig. 2 ein Flussdiagramm zur Implementierung des Verfahrens gemäß einem Ausführungsbeispiel der Erfindung;

Fig. 3 ein Beispiel für die Implementierung des erfindungsgemäßen Verfahrens in einem Batteriemanagementsystem; und

Fig. 4 eine schematische Darstellung eines Batterieladegeräts mit einem Batteriemanagementsystem.

Gemäß Ausführungsbeispielen der vorliegenden Erfindung wird ein Ansatz gelehrt, um eine verfügbare Kapazität in einem Batteriestrang, der eine Mehrzahl von seriell verschalteten Batteriezellen umfasst, zu erhöhen, indem die Batteriezellen basierend auf der tatsächlich in den Batteriezellen vorhandenen Ladungsmengen angeglichen werden.

Hierfür wird die Alterung jeder Batteriezelle ermittelt, wobei der Alterungszustand als SOH (State of Health) bezeichnet wird, der im Idealzustand 1 oder 100% beträgt und mit der Zeit abnimmt, wobei der Alterungszustand unabhängig vom Ladezustand der Zelle ist. Das Alter bzw. der Alterungszustand einer Batteriezelle kann während eines Kapazitätstests bestimmt werden, der beispielsweise bei dem oben erwähnten SOC-geführten Batteriemanagementsystem durchgeführt wird. Alternativ können auch andere Verfahren zur Bestimmung des Alters bzw. des Alterungszustands einer Batteriezelle herangezogen werden, wobei diesbezüglich z.B. auf die Verfahren verwiesen wird, die oben im Zusammenhang mit der Alterungsbestimmung bei bekannten SOC-geführten Batteriemanagementsystemen erwähnt wurden. Der Alterungszustand einer Batteriezelle ist z.B. wie folgt definiert:

$$SOH_{aktuell} = \frac{aktuelle\ Kapazität}{Nennkapazität}$$

Die aktuelle Kapazität einer Batteriezelle im Verhältnis zur Nennkapazität der Batteriezelle, die im Batteriedatenblatt angegeben ist, ergibt einen Wert von kleiner als 1, und dieser Wert beschreibt die Alterung der Batteriezelle relativ zum Idealzustand.

Erfindungsgemäß wird durch die ermittelten Ladungsmengen der einzelnen Batteriezellen auch die jeweilige Alterung der jeweiligen Batteriezelle bei der Beurteilung mit einbezogen, wobei gemäß Ausführungsbeispielen wenig gealterte Batteriezellen stärker und stark gealterte Batteriezellen weniger mit Korrekturströmen belastet werden.

Da der SOH bei starker Alterung abnimmt, wird gemäß Ausführungsbeispielen vorgeschlagen, den tatsächlichen SOH-Wert ($SOH_{aktuell}$ - aktueller Alterungszustand) heranzuziehen, um den aktuellen Ladezustand $SOC_{aktuell}$ zu gewichten. Der durch den aktuellen Alterungszustand einer Batteriezelle gewichtete aktuelle Ladezustand einer Batteriezelle wird mit $SOX_{aktuell}$ (Ladungsmenge) bezeichnet:

$$SOX_{aktuell} = SOH_{aktuell} * SOC_{aktuell}$$

An dieser Stelle sei darauf hingewiesen, dass die obige Formel für alle Batterien bzw. Batteriezellen in dem Strang gilt, sofern alle Batterien bzw. Batteriezellen in dem Strang vom gleichen Typ sind und die gleiche Kapazität (Nennkapazität $C_{Nenn}$) aufweisen. Sind unterschiedliche Batterien bzw. Batteriezellen in dem Strang enthalten (verschiedenen Typen mit unterschiedlichen Nennkapazitäten $C_{Nenn}$), so werden die SOH-Werte untereinander gewichtet.

Somit wird gemäß Ausführungsbeispielen ein Cell-Balancing-Ansatz ermöglicht, der als Führungsgröße die Ladungsmenge in der Zelle aufweist, wodurch der Alterungszustand der Zelle berücksichtigt wird.

Alternativ kann $SOX_{aktuell}$ (Ladungsmenge) wie folgt bestimmt werden:

$$SOX_{aktuell} = \frac{aktuell\ entehmbare\ Ladungsmenge}{Nennkapazität}$$

wobei die sich die aktuell entnehmbare Ladungsmenge wie folgt ergibt:

$$Q_{aktuell} = SOH_{aktuell} * SOC_{aktuell} * C_{Nenn} = aktuell\ entnehmbare\ Ladungsmenge$$

An dieser Stelle sei darauf hingewiesen, dass die obige Formel für die aktuell entnehmbare Ladungsmenge $Q_{aktuell}$, anders als die Formel für die Ladungsmenge $SOX_{aktuell}$, für alle Batterien bzw. Batteriezellen in dem Strang gilt, unabhängig davon, ob alle Batterien bzw. Batteriezellen in dem Strang vom gleichen Typ sind und die gleiche Kapazität (Nennkapazität $C_{Nenn}$) aufweisen.

Basierend auf den so, für die verschiedenen Batteriezellen erfassten Ladungsmengen oder aktuell entnehmbaren Ladungsmengen, die jeweils den Alterungszustand der entsprechenden Batteriezellen berücksichtigen, wird ein Angleichen der Batteriezellen durchgeführt, wie es nachfolgend näher erläutert wird.

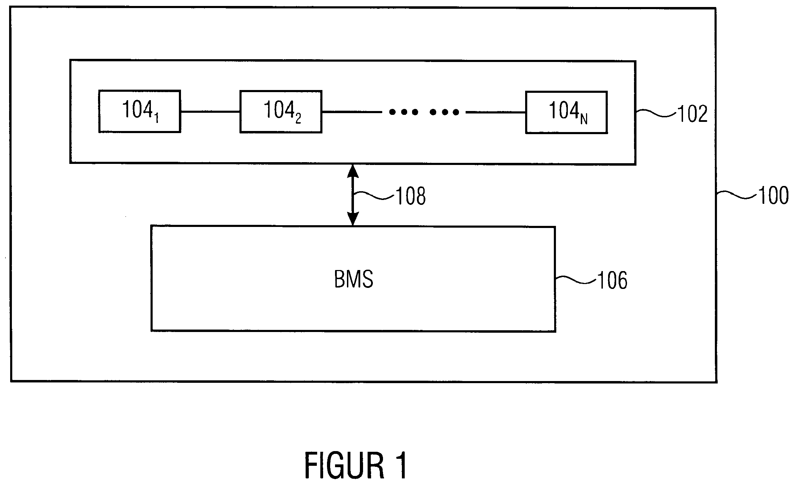

Die Fig. 1 zeigt eine schematische Darstellung einer Batterie 100, welche zumindest einen Batteriestrang 102 aufweist, der seinerseits eine Mehrzahl von seriell verschalteten Batteriezellen $104_1$ bis $104_N$ umfasst. Ferner umfasst die Batterie 100 ein Batteriemanagementsystem 106 (BMS), wie es dem Grunde nach aus dem Stand der Technik bekannt ist, welches aber auf die Zellen $104_1$ bis $104_N$ einwirkt, um deren Ladungsmengen anzupassen, basierend auf einer aktiven oder einer passiven Vorgehensweise (aktives Cell-Balancing oder passives Cell-Balancing). Passives Cell-Balancing, wie es hier verwendet wird, beschreibt ein Cell-Balancing-Verfahren, bei dem Ladungsmengen durch Schaltungen angeglichen werden, ohne eine Ladungsverschiebung zu nutzen. Ein Anwendungsbeispiel ist das dissipative Cell-Balancing, bei dem Ladungsenergie in Wärme umgewandelt wird und somit chemische Energie beim Angleichen der Batteriezellen verloren geht. Aktives Cell-Balancing arbeitet mit einer Energieübertragung. Beim aktiven Cell-Balancing, wie hier verwendet, werden ebenfalls Zellen angeglichen, mit dem Ziel weniger Ladung in Wärme umzuwandeln und damit zu verlieren. Dies macht die aktiven Cell-Balancing-Ansätze allerdings komplexer.

Das Batteriemanagementsystem 106 und der Batteriestrang 102 sind wirksam miteinander verbunden, wie dies schematisch bei 108 gezeigt ist, so dass das Batteriemanagementsystem (106) Messsignale von dem Batteriestrang 102 bzw. von jeder der einzelnen Batteriezellen $104_1$ bis $104_N$ erhalten kann, um basierend hierauf einen aktuellen SOC-Wert und einen aktuellen SOH-Wert zu bestimmen, und um entsprechende Ansteuersignale für das Cell-Balancing bereitzustellen.

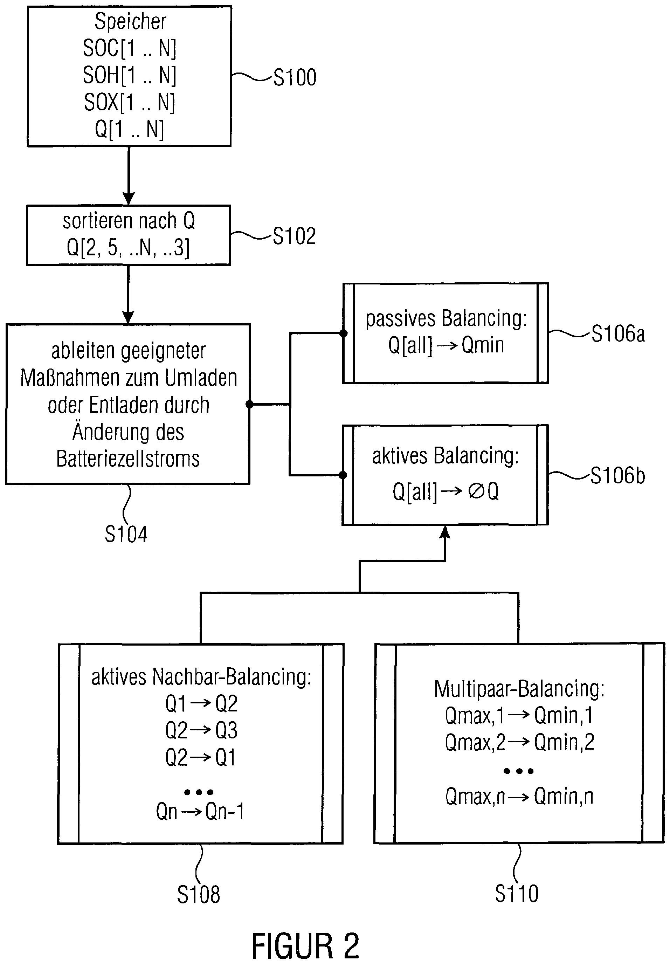

Die Fig. 2 zeigt ein Flussdiagramm zur Implementierung des Verfahrens gemäß einem Ausführungsbeispiel der Erfindung, wie es beispielsweise durch das Batteriemanagementsystem 106 gemäß Fig. 1 ausgeführt werden kann. Das Batteriemanagementsystem 106 aus Fig. 1 kann einen Speicher umfassen, in dem, wie beim Schritt S100 in Fig. 2 dargestellt ist, die aktuellen Werte für den Ladezustand (SOC), den Alterungszustand (SOH), den durch den aktuellen Alterungszustand gewichteten Ladezustand (SOX) und die aktuelle entnehmbare Ladungsmenge $Q_{aktuell}$ für jede der im Strang 102 befindlichen Batteriezellen $104_1$ bis $104_N$ enthält. Basierend auf diesen Anfangswerten arbeitet das erfindungsgemäße Verfahren gemäß einem Ausführungsbeispiel derart, dass im Schritt S102 die Batteriezellen $104_1$ bis $104_N$ entsprechend ihrer aktuell entnehmbaren Ladungsmenge sortiert werden, so dass sich bei dem in Fig. 2 dargestellten Ausführungsbeispiel die im Schritt S102 gezeigte Reihenfolge der Batteriezellen 2, 5, .... N .... 3 einstellt. Für die so sortierten Batteriezellen werden dann im Schritt S104 geeignete Maßnahmen abgeleitet, um ein Umladen oder Entladen der verschiedenen Zellen auf eine geeignete Art und Weise zu bewerkstelligen, beispielsweise durch eine entsprechende Änderung des Batteriezellstroms jeder der Batteriezellen $104_1$ bis $104_N$. Abhängig von der Ausgestaltung des Batteriemanagementsystems 106 kann entweder ein passives Balancing (siehe Schritt S106a) oder ein aktives Balancing (siehe Schritt S106b) durchgeführt werden. Beim passiven Balancing im Schritt S106a wird, auf an sich bekannte Art und Weise, der Ladezustand aller Batteriezellen $104_1$ bis $104_N$ im Batteriestrang 102 auf den Ladezustand gebracht, der dem Ladezustand derjenigen Batteriezelle entspricht, die den niedrigsten Ladezustand oder minimalen Ladezustand aufweist, wobei sich dieser minimale Ladezustand aus der Sortierung im Schritt 102 ergibt, und, anders als im Stand der Technik, auf dem durch den Alterungszustand der Batteriezellen gewichteten aktuellen Ladezustand der Batteriezellen basiert. Bei anderen Ausführungsbeispielen kann vorgesehen sein, die Batteriezellen entsprechend Ihrer Ladungsmenge (SOX) zu sortieren.

Beim aktiven Balancing ist vorgesehen, die Batteriezellströme so zu ändern, dass die Ladungsmenge aller Batteriezellen im Strang 102 auf einen durchschnittlichen Wert gebracht wird, wobei hierfür unterschiedliche Ansätze vorgesehen sein können, beispielsweise ein aktives Nachbar-Balancing (siehe Schritt S108), ein One-Pair-Balancing oder ein Multi-paar-Balancing (siehe Schritt S110). Die Begriffe Nachbar-Balancing, One-Pair-Balancing und MultiPair-Balancing sind wie folgt definiert:

- Beim Nachbar-Balancing werden lediglich direkte Nachbarn im Batteriestrang durch Ladungstransfer aneinander angepasst.
- Das Einzel-Paar Balancing beschreibt eine aktive Balancingschaltung, die die Batteriezellen mit den extremsten Werten (SOC / SOX / Spannung) durch Ladungstransfer untereinander angleicht.
- Das Multi-Paar-Balancing ist in der Lage gleichzeitig viele Zell-Pärchen jeweils untereinander anzugleichen.

Somit wird im Schritt S108 beim Anwenden des aktiven Nachbar-Balancing eine Anpassung der Ladungsmenge jeweils benachbarter Batteriestränge durchgeführt, wobei sich die Nachbarschaft der Batteriestränge aus der Reihenfolge im Schritt S102 ergibt. Beim Anwenden des Multipaar-Balancing im Schritt S110 erfolgt eine Anpassung der Ladungsmenge der Batteriezellen mit den jeweils maximalen und minimalen Ladungsmengen, die sich ebenfalls aus der Reihenfolge gemäß Schritt S102 ergeben. Die oben beschriebenen aktiven Balancingansätze gemäß den Schritten S108 und S110 arbeiten erfindungsgemäß basierend auf den Ladungsmengen, so dass der Alterungszustand der einzelnen Batteriezellen berücksichtigt ist.

Bei dem oben beschriebenen Ausführungsbeispiel werden die Batteriezellen so angeglichen, dass eine vorbestimmte Ladungsmenge erreicht wird, z.B. eine maximale oder minimale Ladungsmenge oder eine durchschnittliche Ladungsmenge. Es sei darauf hingewiesen, dass auch andere Werte für die zu erreichende Ladungsmenge vorgesehen werden können, z.B. abhängig von den technischen Gegebenheiten. So kann z.B. vorgesehen sein, die Ladungsmenge auf einen vorab festgelegten Wert bei allen Batteriezellen einzustellen. Ferner kann aufgrund von Messtoleranzen oder Berechnungstoleranzen beim Erfassen/Bestimmen der Werte an einer Batteriezelle vorgesehen sein, das Angleichen so vorzunehmen, dass eine Ladungsmenge innerhalb eines Bereichs (z.B. $\pm$ 10%) um einen erwünschten Wert liegt, wobei dieser Bereich für alle Batteriezellen gleich oder unterschiedlich sein kann.

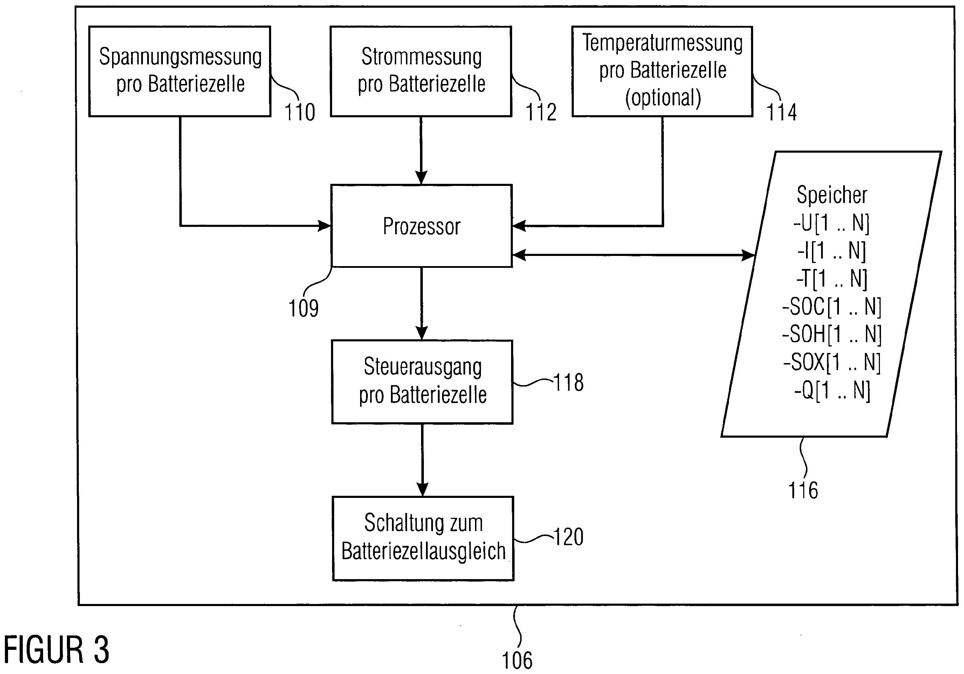

Die Fig. 3 zeigt ein Beispiel für die Implementierung des erfindungsgemäßen Verfahrens in dem Batteriemanagementsystem 106. Fig. 3 ist eine schematische Darstellung und zeigt das Batteriemanagementsystem 106, welches einen Prozessor 107 umfasst, der vorgesehen ist, um die Ladungsmengen von Batteriezellen auf die oben beschriebene Art und Weise anzugleichen. Das Batteriemanagementsystem 106 umfasst ferner einen Spannungsmesser 110, der eine Erfassung einer Spannung für jede der in dem Strang 102 befindlichen Batteriezellen $104_1$ bis $104_N$ ermöglicht. Ferner ist ein entsprechender Strommesser 112 vorgesehen sowie ein optionaler Temperatursensor 114. Die Messelemente 110 bis 114 sind wirksam mit dem Prozessor 107 verbunden, der wiederum wirksam mit einem Speicher 116 verbunden ist, in dem für die einzelnen Batteriezellen die Spannungswerte, Stromwerte, Temperaturwerte sowie die bestimmten Ladezustände SOC, Alterungszustände SOH, die durch die Alterungszustand gewichteten aktuellen Ladezustände SOX (Ladungsmenge) und die aktuell entnehmbaren Ladungsmengen gespeichert sind.

Basierend auf den im Speicher 116 enthaltenen Werten bestimmt der Prozessor 107, beispielsweise auf Grundlage des anhand der Fig. 2 erläuterten Verfahrens, welches in dem Prozessor als Software- oder Hardware implementiert ist, Steuersignale für jede der Batteriezellen, um einen Stromfluss durch die Batteriezelle zu steuern. Hierfür ist der Prozessor 107 mit einer Mehrzahl von Steuerausgängen 118 verbunden, die in Fig. 3 lediglich schematisch gezeigt sind, um entsprechende Steuersignale für eine Schaltung 120 (Batteriezellenangleichschaltung) zum Durchführen des Batteriezellausgleiches bereitzustellen, die auf die einzelnen Zellen einwirkt, um die entsprechenden Ströme durch dieselben zu steuern, um den Ladungsmengenausgleich auf die oben beschriebene Art und Weise (siehe Fig. 2) (Schritte S104, S110) zu bewirken.

Gemäß Ausführungsbeispielen kann der SOH (Alterungszustand) einer Batteriezelle durch einen Kapazitätstest bestimmt werden, der die aktuelle Kapazität einer Batteriezelle bestimmt. Der SOC (aktueller Ladezustand) kann durch eine Amperestundenzählung mit einer Rekalibrierung bestimmt werden.

Alternativ können die Werte für SOH und SOC auch während des Betriebs durch verschiedene Algorithmen, beispielsweise durch ein Fuzzy-System, ein Kalman- und Partikelfilter, bestimmt werden.

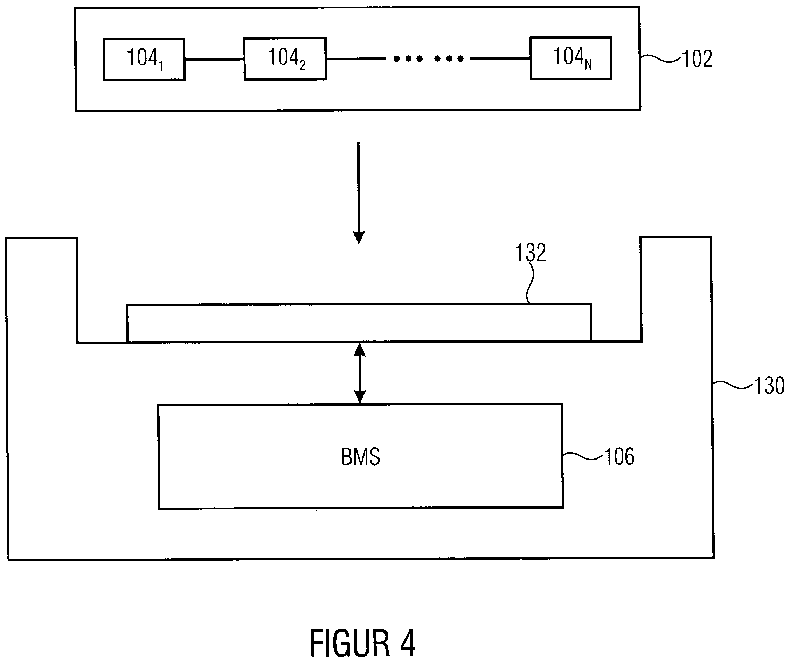

Beim oben anhand der Fig. 1 beschriebenen Beispiel wurde eine Batterie 100 dargestellt, die zusätzlich zu dem Batteriestrang 102 auch ein Batteriemanagementsystem 106 umfasst. An dieser Stelle sei darauf hingewiesen, dass der erfindungsgemäße Ansatz nicht auf eine solche Ausgestaltung einer Batterie 100 mit integriertem Batteriemanagementsystem beschränkt ist, vielmehr kann das Batteriemanagementsystem auch ein externes Bauteil sein, beispielsweise als Teil eines Ladegeräts 130, welches schematisch in Fig. 4 gezeigt ist. Das Ladegerät umfasst einen Anschluss 132, über den eine Batterie 100 an das Ladegerät angeschlossen werden kann. Ist eine Batterie angeschlossen, so ist das BMS 106 beim Laden des Batteriestranges bzw. der Batterie 100 wirksam mit den einzelnen Batteriezellen verbindbar ist, um das erfindungsgemäße Angleichen der Ladezustände (Cell-Balancing) durchzuführen.

Erfindungsgemäß wird durch die oben beschriebene Vorgehensweise somit ein Cell-Balancing-Algorithmus erreicht, der nicht mehr die aktuellen Ladezustände angleicht, sondern die aktuell entnehmbaren Ladungsmengen, wodurch ein Cell-Balancing-Ansatz geschaffen wird, der die entnehmbare Kapazität und somit die Lebensdauer von Batteriepacks, die aus Strängen mit unterschiedlich gealterten Batteriezellen bestehen, gegenüber bekannten Algorithmen erhöht. Im Stand der Technik wurde bisher lediglich basierend auf dem aktuellen Ladezustand bzw. mit dem Ladezustand korrelierenden Zellspannung eine Umwandlung von in der Batterie gespeicherter chemischer Energie in Wärme oder eine Verschiebung von Ladungen durchgeführt, wohingegen gemäß der vorliegenden Erfindung nunmehr auch der Alterungsgrad einer Batteriezelle bei der Beurteilung einbezogen wird, insbesondere als begrenzender Faktor, so dass ein Cell-Balancing nun gezielt und sparsam eingesetzt werden kann, insbesondere mit einem geringeren Schaltungsaufwand und geringeren Energieverlusten, wodurch die Effizienz gegenüber bekannten Implementierungen erhöht wird und gleichzeitig aufgrund der erhöhten Effizienz auch ein geringerer Kühlbedarf vorliegt, womit sich auch die Baugröße verkleinern kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zum Erhöhen der verfügbaren Kapazität in einem Batteriestrang (102), der eine Mehrzahl von seriell verschalteten Batteriezellen ($104_1$-$104_N$) umfasst, mit:

   Angleichen der Batteriezellen ($104_1$-$104_N$) basierend auf der tatsächlich in den Batteriezellen ($104_1$-$104_N$) vorhandenen Ladungsmenge,
   wobei die Ladungsmenge einer Batteriezelle ($104_1$-$104_N$) basierend auf einem aktuellen Ladezustand der Batteriezelle ($104_1$-$104_N$) und einem Alterungszustand der Batteriezelle ($104_1$-$104_N$) bestimmt wird,
   wobei die Batterien in dem Batteriestrang (102) vom gleichen Typ sind und die gleiche Nennkapazität ($C_{Nenn}$) aufweisen, und
   wobei beim Angleichen der Batteriezellen ($104_1$-$104_N$) wenig gealterte Batteriezellen ($104_1$-$104_N$) stärker mit Korrekturströmen belastet werden als stark gealterte Batteriezellen ($104_1$-$104_N$).

2. Verfahren nach Anspruch 1, bei dem die Ladungsmenge der Batteriezelle ($104_1$-$104_N$) bestimmt wird, indem der aktuelle Ladezustand der Batteriezelle ($104_1$-$104_N$) durch den Alterungszustand der Batteriezelle ($104_1$-$104_N$) gewichtet wird.

3. Verfahren nach Anspruch 1, bei dem die Ladungsmenge einer Batteriezelle ($104_1$-$104_N$) eine aktuell entnehmbare Ladungsmenge der Batteriezelle ($104_1$-$104_N$) umfasst, die basierend auf einem aktuellen Ladezustand der Batteriezelle ($104_1$-$104_N$), einem Alterungszustand der Batteriezelle ($104_1$-$104_N$) und der Nennkapazität der Batteriezelle

($104_1$-$104_N$) bestimmt wird.

4. Verfahren nach Anspruch 3, bei dem die aktuell entnehmbare Ladungsmenge der Batteriezelle ($104_1$-$104_N$) bestimmt wird, indem der aktuelle Ladezustand der Batteriezelle ($104_1$-$104_N$) durch den Alterungszustand der Batteriezelle ($104_1$-$104_N$) und die Nennkapazität der Batteriezelle ($104_1$-$104_N$) gewichtet wird.

5. Verfahren nach einem der Ansprüche 1 bis 4, bei dem für jede der Batteriezellen ($104_1$-$104_N$) die Ladungsmenge bzw. die aktuell entnehmbare Ladungsmenge bestimmt wird.

6. Verfahren nach Anspruch 5, bei dem das Angleichen der Batteriezellen ($104_1$-$104_N$) Folgendes umfasst:

Sortieren (S102) der Batteriezellen ($104_1$-$104_N$) nach deren Ladungsmenge bzw. aktuell entnehmbarer Ladungsmenge, und
Umladen oder Entladen (S106a, S106b) der Batteriezellen ($104_1$-$104_N$) basierend auf der Reihenfolge der sortierten Batteriezellen ($104_1$-$104_N$).

7. Verfahren nach Anspruch 6, bei dem das Umladen oder Entladen (S106a, S106b) der Batteriezellen ($104_1$-$104_N$) eine Änderung eines Batteriezellenstroms umfasst.

8. Verfahren nach Anspruch 6 oder 7, bei dem das Umladen oder Entladen (S106a, S106b) der Batteriezellen ($104_1$-$104_N$) eine Anpassung der Ladungsmenge der Batteriezellen ($104_1$-$104_N$) auf die Ladungsmenge der Batteriezelle ($104_1$-$104_N$) mit der niedrigsten Ladungsmenge oder auf eine mittlere Ladungsmenge aller Batteriezellen ($104_1$-$104_N$) umfasst.

9. Verfahren nach einem der Ansprüche 1 bis 8, bei dem der Alterungszustand einer Batteriezelle ($104_1$-$104_N$) aus dem Verhältnis der aktuellen Kapazität zu der Nennkapazität der Batteriezelle ($104_1$-$104_N$) bestimmt wird.

10. Vorrichtung zum Erhöhen der verfügbaren Kapazität in einem Batteriestrang (102), der eine Mehrzahl von seriell verschalteten Batteriezellen ($104_1$-$104_N$) umfasst, mit:

einem Prozessor (107), der konfiguriert ist, um die Batteriezellen ($104_1$-$104_N$) basierend auf der tatsächlich in den Batteriezellen ($104_1$-$104_N$) vorhandenen Ladungsmenge anzugleichen,
wobei Prozessor (107), der konfiguriert ist, um die Ladungsmenge einer Batteriezelle ($104_1$-$104_N$) basierend auf einem aktuellen Ladezustand der Batteriezelle ($104_1$-$104_N$) und einem Alterungszustand der Batteriezelle ($104_1$-$104_N$) zu bestimmen,
wobei die Batterien in dem Batteriestrang (102) vom gleichen Typ sind und die gleiche Nennkapazität ($C_{Nenn}$) aufweisen, und
wobei beim Angleichen der Batteriezellen ($104_1$-$104_N$) wenig gealterte Batteriezellen ($104_1$-$104_N$) stärker mit Korrekturströmen belastet werden als stark gealterte Batteriezellen ($104_1$-$104_N$).

11. Batteriemanagementsystem (106) für einen Batteriestrang (102), der eine Mehrzahl von seriell verschalteten Batteriezellen ($104_1$-$104_N$) umfasst, mit einer Vorrichtung nach Anspruch 10.

12. Batteriemanagementsystem nach Anspruch 11, mit:

einem oder mehreren Eingängen (110-114) zum Bereitstellen von Messungen an den Batteriezellen ($104_1$-$104_N$), und
einen oder mehreren Ausgängen (118) zum Bereitstellen von Steuersignalen zum Ansteuern der Batteriezellen ($104_1$-$104_N$).

13. Batteriemanagementsystem nach Anspruch 11 oder 12, mit einer Batteriezellenangleichschaltung (120), die ansprechend auf Steuersignale von dem Prozessor (107) das Angleichen der der Batteriezellen ($104_1$-$104_N$) bewirkt.

14. Batterie (100), mit:

einer Mehrzahl von seriell verschalteten Batteriezellen ($104_1$-$104_N$), und
einer Vorrichtung nach Anspruch 10 oder einem Batteriemanagementsystem (106) nach Anspruch 11.

**15.** Batterieladegerät (130), mit:

einem Anschluss (132) zum Verbinden mit einer Batterie (100), die eine Mehrzahl von seriell verschalteten Batteriezellen ($104_1$-$104_N$) umfasst; und
einer Vorrichtung nach Anspruch 10 oder einem Batteriemanagementsystem (106) nach Anspruch 11.

**Claims**

**1.** Method for increasing the available capacity in a battery branch (102) including a plurality of battery cells ($104_1$-$104_N$) connected in series, comprising:

adjusting the battery cells ($104_1$-$104_N$) on the basis of the amount of charge actually present within the battery cells ($104_1$-$104_N$),
wherein the amount of charge of a battery cell ($104_1$-$104_N$) is determined on the basis of a current state of charge of the battery cell ($104_1$-$104_N$) and a state of aging of the battery cell ($104_1$-$104_N$),
wherein the batteries in the battery branch (102) are of the same type and comprise the same nominal capacity ($C_{Nom}$), and
wherein, during adjusting the battery cells ($104_1$-$104_N$), sparingly aged battery cells ($104_1$-$104_N$) are loaded more heavily with correction currents than heavily aged battery cells ($104_1$-$104_N$).

**2.** Method according to claim 1, wherein the amount of charge of the battery cell ($104_1$-$104_N$) is determined by weighting the current state of charge of the battery cell ($104_1$-$104_N$) by the state of aging of the battery cell ($104_1$-$104N_)$.

**3.** Method according to claim 1, wherein the amount of charge of a battery cell ($104_1$-$104_N$) includes a currently removable amount of charge of the battery cell ($104_1$-$104_N$), which is determined on the basis of a current state of charge of the battery cell ($104_1$-$104_N$), a state of aging of the battery cell ($104_1$-$104_N$) and the nominal capacity of the battery cell ($104_1$-$104_N$).

**4.** Method according to claim 3, wherein the currently removable amount of charge of the battery cell ($104_1$-$104_N$) is determined by weighting the current state of charge of the battery cell ($104_1$-$104_N$) by the state of aging of the battery cell ($104_1$-$104_N$) and the nominal capacity of the battery cell ($104_1$-$104_N$).

**5.** Method according to any one of claims 1 to 4, wherein the amount of charge and/or the currently removable amount of charge is determined for each of the battery cells ($104_1$-$104_N$).

**6.** Method according to claim 5, wherein adjusting the battery cells ($104_1$-$104_N$) includes:

sorting (S102) the battery cells ($104_1$-$104_N$) according to their amounts of charge and/or currently removable amounts of charge, and
transferring the charge of or discharging (S106a, S106b) the battery cells ($104_1$-$104_N$) on the basis of the order of the sorted battery cells ($104_1$-$104_N$).

**7.** Method according to claim 6, wherein transferring the charge of or discharging (S106a, S106b) the battery cells ($104_1$-$104_N$) includes changing a battery cell current.

**8.** Method according to claim 6 or 7, wherein transferring the charge of or discharging (S106a, S106b) the battery cells ($104_1$-$104_N$) includes adapting the amount of charge of the battery cells ($104_1$-$104_N$) to the amount of charge of the battery cell ($104_1$-$104_N$) having the lowest amount of charge or to a mean amount of charge of all battery cells ($104_1$-$104_N$).

**9.** Method according to any one of claims 1 to 8, wherein the state of aging of a battery cell ($104_1$-$104_N$) is determined from the ratio of the current capacity to the nominal capacity of the battery cell ($104_1$-$104_N$),

**10.** Apparatus for increasing the available capacity in a battery branch (102) including a plurality of battery cells ($104_1$-$104_N$) connected in series, comprising:

a processor (107) configured to adjust the battery cells ($104_1$-$104_N$) on the basis of the amount of charge actually present within the battery cells ($104_1$-$104_N$),
wherein the processor (107) is configured to determine the amount of charge of a battery cell ($104_1$-$104_N$) on the basis of a current state of charge of the battery cell ($104_1$-$104_N$) and a state of aging of the battery cell ($104_1$-$104_N$),
wherein the batteries in the battery branch (102) are of the same type and comprise the same nominal capacity ($C_{Nom}$), and
wherein, during adjusting the battery cells ($104_1$-$104_N$), sparingly aged battery cells ($104_1$-$104_N$) are loaded more heavily with correction currents than heavily aged battery cells ($104_1$-$104_N$).

**11.** Battery management system (106) for a battery branch (102) including a plurality of battery cells ($104_1$-$104_N$) connected in series, comprising an apparatus according to claim 10.

**12.** Battery management system according to claim 11, comprising:

one or more inputs (110-114) for providing measurements at the battery cells ($104_1$-$104_N$), and
one or more outputs (118) for providing control signals for controlling the battery cells ($104_1$-$104_N$),

**13.** Battery management system according to claim 11 or 12, comprising a battery cell adjusting circuit (120) causing the adjusting the battery cells ($104_1$-$104_N$) in response to control signals from the processor (107).

**14.** Battery (100), comprising:

a plurality of battery cells ($104_1$-$104_N$) connected in series; and
an apparatus according to claim 10 or a battery management system (106) according to claim 11.

**15.** Battery charging device (130) comprising:

a terminal (132) for connecting to a battery (100) including a plurality of battery cells ($104_1$-$104_N$) connected in series; and
an apparatus according to claim 10 or a battery management system (106) according to claim 11.

**Revendications**

**1.** Procédé destiné à augmenter la capacité disponible dans un groupe de batteries (102) comprenant une pluralité de cellules de batterie connectées en série ($104_1$-$104_N$), avec le fait de:

ajuster les cellules de batterie ($104_1$-$104_N$) sur base de la quantité de charge effectivement présente dans les cellules de batterie ($104_1$-$104_N$)
dans lequel la quantité de charge d'une cellule de batterie ($104_1$-$104_N$) est déterminée sur base d'un état de charge de la cellule de batterie ($104_1$-$104_N$) et d'un état de vieillissement de la cellule de batterie ($104_1$-$104_N$),
dans lequel les batteries dans le groupe de batteries (102) sont du même type et présentent la même capacité nominale ($C_{Nom}$) et
dans lequel, lors de l'ajustage des cellules de batterie ($104_1$-$104_N$), les cellules de batterie peu vieillies ($104_1$-$104_N$) sont plus fortement chargées de courants de correction que les cellules de batterie fortement vieillies ($104_1$-$104_N$).

**2.** Procédé selon la revendication 1, dans lequel la quantité de charge de la cellule de batterie ($104_1$-$104_N$) est déterminée en pondérant l'état de charge actuel de la cellule de batterie ($104_1$-$104_N$) par l'état de vieillissement de la cellule de batterie ($104_1$-$104_N$).

**3.** Procédé selon la revendication 1, dans lequel la quantité de charge d'une cellule de batterie ($104_1$-$104_N$) comporte une quantité de charge pouvant actuellement être prélevée de la cellule de batterie ($104_1$-$104_N$) qui peut être déterminée sur base d'un état de charge actuel de la cellule de batterie ($104_1$-$104_N$), d'un état de vieillissement de la cellule de batterie ($104_1$-$104_N$) et de la capacité nominale de la cellule de batterie ($104_1$-$104_N$),

**4.** Procédé selon la revendication 3, dans lequel la quantité de charge pouvant actuellement être prélevée de la cellule de batterie ($104_1$-$104_N$) est déterminée en pondérant l'état de charge actuel de la cellule de batterie ($104_1$-$104_N$)

par l'état de vieillissement de la cellule de batterie (104$_1$-104$_N$) et la capacité nominale de la cellule de batterie (104$_1$-104$_N$).

5. Procédé selon l'une des revendications 1 à 4, dans lequel est déterminée, pour chacune des cellules de batterie (104$_1$-104$_N$), la quantité de charge ou la quantité de charge pouvant actuellement être prélevée.

6. Procédé selon la revendication 5, dans lequel l'ajustage des cellules de batterie (104$_1$-104$_N$) comprend ce qui suit:

   trier (S102) les cellules de batterie (104$_1$-104$_N$) selon leur quantité de charge ou la quantité de charge pouvant actuellement être prélevée, et
   transférer ou décharger (S106a, S106b) les cellules de batterie (104$_1$-104$_N$) sur base de l'ordre de cellules de batterie triées (104$_1$-104$_N$).

7. Procédé selon la revendication 6, dans lequel le transfert ou le déchargement (S106a, S106b) des cellules de batterie (104$_1$-104$_N$) comprend une modification d'un courant de cellule de batterie.

8. Procédé selon la revendication 6 ou 7, dans lequel le transfert ou le déchargement (S106a, S106b) des cellules de batterie (104$_1$-104$_N$) comporte une adaptation de la quantité de charge des cellules de batterie (104$_1$-104$_N$) à la quantité de charge de la cellule de batterie (104$_1$-104$_N$) à la quantité de charge la plus basse ou à une quantité de charge moyenne de toutes les cellules de batterie (104$_1$-104$_N$).

9. Procédé selon l'une des revendications 1 à 8, dans lequel l'état de vieillissement d'une cellule de batterie (104$_1$-104$_N$) est déterminé à partir du rapport entre la capacité actuelle et la capacité nominale de la cellule de batterie (104$_1$-104$_N$).

10. Dispositif destiné à augmenter la capacité disponible dans un groupe de batteries (102) comportant une pluralité de cellules de batterie connectées en série (104$_1$-104$_N$), avec:

    un processeur (107) qui est configuré pour ajuster les cellules de batterie (104$_1$-104$_N$) sur base de la quantité de charge effectivement présente dans les cellules de batterie (104$_1$-104$_N$),
    dans lequel le processeur (107) est configuré pour déterminer la quantité de charge d'une cellule de batterie (104$_1$-104$_N$) sur base d'un état de charge actuel de la cellule de la batterie (104$_1$-104$_N$) et d'un état de vieillissement de la cellule de batterie (104$_1$-104$_N$),
    dans lequel les batteries dans le groupe de batteries (102) sont du même type et présentent la même capacité nominale (C$_{Nom}$), et
    dans lequel, lors de l'ajustage des cellules de batterie (104$_1$-104$_N$), les cellules de batterie (104$_1$-104$_N$) peu vieillies sont plus fortement chargées de courants de correction que les cellules de batterie (104$_1$-104$_N$) fortement vieillies.

11. Système de gestion de batterie (106) pour un groupe de batteries (102) comportant une pluralité de cellules de batterie connectées en série (104$_1$-104$_N$), avec un dispositif selon la revendication 10.

12. Système de gestion de batterie selon la revendication 11, avec:

    une ou plusieurs entrées (110-114) destinées à mettre à disposition des mesures sur les cellules de batterie (104$_1$-104$_N$), et
    une ou plusieurs sorties (118) destinées à mettre à disposition des signaux de commande pour activer les cellules de batterie (104$_1$-104$_N$).

13. Système de gestion de batterie selon la revendication 11 ou 12, avec un circuit d'ajustage de cellules de batterie (120) qui provoque, en réponse à des signaux de commande du processeur (107), l'ajustage des cellules de batterie (104$_1$-104$_N$).

14. Batterie (100), avec:

    une pluralité de cellules de batterie connectées en série (104$_1$-104$_N$), et
    un dispositif selon la revendication 10 ou un système de gestion de batterie (106) selon la revendication 11.

**15.** Chargeur de batterie (130), avec:

une borne de raccordement (132) pour la connexion à une batterie (100) comportant une pluralité de cellules de batterie connectées en série ($104_1$-$104_N$); et
un dispositif selon la revendication 10 ou un système de gestion de batterie (106) selon la revendication 11.

FIGUR 1

Speicher
SOC[1 .. N]
SOH[1 .. N]
SOX[1 .. N]
Q[1 .. N]
S100

sortieren nach Q
Q[2, 5, ..N, ..3]
S102

ableiten geeigneter
Maßnahmen zum Umladen
oder Entladen durch
Änderung des
Batteriezellstroms
S104

passives Balancing:
Q[all] → Qmin
S106a

aktives Balancing:
Q[all] → ∅Q
S106b

aktives Nachbar-Balancing:
Q1 → Q2
Q2 → Q3
Q2 → Q1
• • •
Qn → Qn-1
S108

Multipaar-Balancing:
Qmax,1 → Qmin,1
Qmax,2 → Qmin,2
• • •
Qmax,n → Qmin,n
S110

FIGUR 2

FIGUR 3

EP 2 944 009 B1

FIGUR 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120256599 A
- WO 2012157747 A
- WO 2012139604 A1
- US 20130026989 A1
- DE 102011079469 A1

**In der Beschreibung aufgeführte Nicht-Patentliteratur**

- Journal of Power Sources. *Corrected Proof,* 25. Oktober 2012
- Optimierung eines Batteriemanagementsystems zum Einsatz in photovoltaischen Stromversorgungssystemen. **KAISER, R.** Dissertation. Universität Ulm, 2005
- **LEE, S. ; KIM, J. ; LEE, J. ; CHO, B.** State-of charge and capacity estimation of lithium-ion battery using a new open-circuit voltage versus state-of-charge. *Journal of Power Sources,* 2008, vol. 185 (2), 1367-1373